# EUROPEAN PATENT SPECIFICATION

(11) **EP 1 618 767 B1**
(45) Date of publication and mention of the grant of the patent: **20.06.2007**
(21) Application number: 04727950.0
(22) Date of filing: 16.04.2004
(51) Int. Cl.: H05H 1/24, H05H 1/46

(54) **APPARATUS AND METHOD FOR FORMING A PLASMA**
VORRICHTUNG UND VERFAHREN ZUR BILDUNG EINES PLASMAS
APPAREIL ET PROCEDE POUR FORMER UN PLASMA

(30) Priority: 30.04.2003 GB 0309932
(43) Date of publication of application: 25.01.2006
(60) Divisional application: 07003186.9
(73) Proprietor: The BOC Group plc, Windlesham Surrey GU20 6HJ (GB)
(72) Inventor: SEELEY, Andrew, James, Bristol BS1 4RH (GB)
(74) Representative: Booth, Andrew Steven
(86) International application number: PCT/GB2004/001718
(87) International publication number: WO 2004/098246

(56) References cited:
- US-A- 4 282 267
- US-A- 4 818 560
- US-A- 5 418 430
- US-A1- 2003 000 823
- DATABASE WPI Section EI, Week 199616 Derwent Publications Ltd., London, GB; Class U11, AN 1996-158657 XP002287306 & RU 1 568 805 C (AS USSR MICROELTRN ULTRAPURE CPDS INST) 27 July 1995 (1995-07-27)

## Description

The invention relates to plasma sources. In particular, the invention provides embodiments useful in plasma abatement systems, although the invention is not limited to such systems.

A stable plasma requires certain physical conditions to exist. However, even when those conditions exist, a plasma may not spontaneously ignite. Examples of that phenomenon are well-known; for example, atmospheric arc welders require an 'RF start'. Another known plasma-ignition technique involves the induction of a 'spark' igniter using a Tesla coil. However, both of those techniques involve the use of metallic components in the plasma reaction chamber, which can be disadvantageous. In the case of microwave-pumped systems, such metal components are found to 'ground' the plasma and cause it to be unstable.

Other known methods used to ignite a plasma include reducing the pressure of the gas from which the plasma is to be formed and the introduction of argon, helium or some other gas or gases that are more easily ionised than the principal plasma gas.

It is particularly important to provide reliable ignition in a microwave plasma. In forming such a plasma, microwaves are generally provided by a magnetron and are transmitted along a waveguide to the plasma, where their energy is absorbed by the plasma, typically in a standing-wave arrangement. However, if the plasma is not ignited (i.e. if there is no plasma but only gas) then little energy is absorbed and, in the standing-wave arrangement, a significant amount of the incident energy is reflected back to the magnetron, which can severely shorten its lifetime. Such back-reflections may be reduced by including a one-way circulator or 'valve' in the microwave transmission line but such an arrangement adds to the cost of the device. A method of reliably igniting a microwave plasma is therefore desirable.

Plasma abatement has become a widely used method of eliminating exhaust gases from manufacturing processes, and is of particular application in the degradation of perhalogenated compounds especially perfluorinated compounds (PFCs).

PFCs are commonly used in the semiconductor manufacturing industry, for example, in dielectric film etching, and following the manufacturing process there is typically a residual PFC content in effluent gases. The PFCs are difficult to remove from the effluent. Their release into the environment is undesirable because they are known to have relatively high greenhouse activity. A variety of abatement methods have been used previously, for example, combustion, reactive adsorption and catalytic oxidation. The objective of abatement is to convert the PFC into one or more compounds that can be more conveniently disposed of, for example, by conventional scrubbing.

Plasma abatement has proved to be an effective method for degradation of PFCs to less damaging species. In the plasma abatement process, an effluent gas containing the species to be destroyed is caused to flow into a high density plasma and under the intensive conditions within the plasma the PFCs are subjected to impact with energetic electrons causing dissociation into reactive species which can combine with oxygen or hydrogen to produce relatively stable, low molecular weight by-products, for example, CO, CO₂ and HF, which can then be removed in a further treatment step.

In one form of previously known plasma abatement, the plasma is a microwave plasma. It is also known to use a radio-frequency plasma.

One form of device suitable for use in microwave plasma abatement is described in UK Patent Specification GB 2273027A. In that device, the microwave plasma is generated between two electrodes, which are in closely opposed relationship. The arrangement shown in GB 2273027A is self-starting. The arrangement of GB 2273027A suffers from a relatively high degree of corrosion of the electrodes by the reaction products.

US2002/0101162 describes a microwave plasma generator that is ignited by a spark from a Tesla coil.

RU 1,568,805 describes a device for microwave plasma treatment of materials, in which gas activated by microwave radiation enters a reaction chamber to contact a gas to be treated.

US2003/0000823 describes an atmospheric-pressure microwave plasma generator that is ignited by a tungsten electrode hold in a ceramic tube.

According to the present invention as defined by the appended claims, there is provided apparatus for forming a plasma for treating a gas, comprising means for generating, from a fluid different from the gas to be treated by the plasma, an ionised fluid stream for igniting the plasma, and a structure arranged to sustain the plasma, wherein the plasma-sustaining structure is arranged to be substantially at atmospheric pressure during plasma formation.

The inventors have demonstrated that provision of an ionised fluid stream, for example, a glow discharge source permits effective ignition of a plasma where the electric field conditions in the plasma-sustaining structure are such that the plasma cannot or cannot reliably self-start.

The plasma-sustaining structure is arranged to be substantially at atmospheric pressure during plasma formation. Significant simplification of apparatus may result when it is not necessary to keep the plasma-maintaining structure at a pressure other than atmospheric.

As mentioned above, the plasma-sustaining structure may be arranged to utilise electromagnetic radiation in sustaining the plasma. Thus, the plasma-sustaining structure may comprise a source of the electromagnetic radiation or it may be suitable for connection to a source of the electromagnetic radiation. The electromagnetic radiation may be microwave or radio-frequency radiation; microwave and radio-frequency plasmas are of particular interest in plasma abatement systems, as discussed above. The radiation may for example have a frequency of around 580 kHz, 13.56 MHz, 27 MHz, 915 MHz or 2.45 GHz (prior-art devices operate around those frequencies). The plasma-sustaining structure may comprise a chamber that is resonant at the frequency of the electromagnetic radiation. Utilising a resonant cavity can result in formation of an electromagnetic standing wave, which provides localised enhancement of electromagnetic field strength, particularly in the vicinity of the antinode or antinodes of the standing wave.

The plasma-sustaining structure may comprise a chamber that is connectable to a flow of gas to be treated by the plasma.

The plasma-sustaining structure may comprise at least one plasma-localising electrode. By localising the plasma to a relatively constricted region in the plasma-sustaining structure, a pressure drop may be obtained that enables ignition and sustenance of the plasma to be achieved more readily. The plasma-locating electrode may be pointed; a pointed electrode enhances the electric field in its vicinity. The plasma-localising electrode may be arranged at or near an antinode of an electromagnetic standing wave. The plasma-sustaining structure may comprise two plasma-localising electrodes.

As mentioned above, in certain known plasma reactors, for example, that described in GB 2273027A, the plasma is localised between opposed electrodes. The plasma is sustained by virtue of the electric field between the electrodes, which comprises a component attributable to the incident electromagnetic waves and a component attributable to the plasma. In the previously known arrangement, it was considered advantageous to have the electrodes closely opposed, for example, at a separation of 0.1 to 0.5mm. It has now been found that the plasma stability can be enhanced and the erosion of the electrodes by the corrosive by-products of the plasma reaction reduced by increasing the spacing between the electrodes. Thus, for example, in some embodiments the plasma-localising electrodes may comprise first and second electrodes opposed to one another and spaced from one another by a spacing of at least 1 mm, for example between 2 mm and 8 mm.

A consequence of increasing the spacing between the electrodes is that, for a given applied power, the strength of the field between the electrodes, is reduced. As a result, the conditions for reliable initial formation of the plasma may no longer exist.

The aforementioned apparatus offers the possibility of operation under conditions that are favourable in terms of plasma stability and reduction in corrosion whilst nonetheless providing effective ignition of the plasma, which would not otherwise be achievable or not be reliably achievable under those operating conditions. Another advantage is that, by removing the need for closely spaced electrodes, larger sources may be provided, capable of handling higher gas flow rates.

The plasma-localising electrode/s may be at electrical ground. The plasma and the incident electromagnetic radiation may thus be at a significantly different potential from the plasma-localising electrode(s),

As previously mentioned, the ionised fluid stream is preferably a glow discharge. As is well known, a glow discharge is a luminous, thermal plasma. It is formed by applying to a gas a voltage that is greater than the breakdown voltage of that gas. Once a glow discharge has been achieved, the voltage required to sustain it is generally lower than the breakdown voltage. The source of the glow discharge may comprise a glow-discharge electrode for forming the glow-discharge. The glow-discharge source may comprise, or be suitable for connection to, a source of the glow-discharge gas (that is, a gas in which the glow-discharge is formed). The glow-discharge gas may be nitrogen or a noble gas or any other substantially inert and ionisable gas. The gas for forming the plasma may comprise for example an exhaust gas from a manufacturing process.

The glow-discharge electrode may be elongate.

The glow-discharge source may comprise circuitry for providing a voltage sufficiently high to initiate the glow discharge and circuitry for providing sufficient current to sustain the glow discharge, preferably for at least 0.1 seconds. The glow-discharge source may be arranged to cease generation of the glow discharge after the plasma is ignited; thus the glow-discharge source may for example be arranged to generate a glow discharge for up to 10 seconds or for example for up to 5 seconds, for example for from 1 to 5 seconds.

The glow-discharge electrode may be arranged to discharge to the plasma-sustaining structure, which may be at electrical ground.

The glow-discharge electrode may be so arranged that in use it is in the glow-discharge gas flow upstream of the plasma-sustaining structure, such that the glow-discharge is transported into the plasma-sustaining structure by the glow-discharge gas. A particular advantage of such an arrangement is that the glow-discharge electrode may thus be arranged away from regions of the apparatus that are very hot and potentially reactive. The lifetime of the electrode may be extended significantly by keeping it out of such regions.

The glow-discharge source may comprise a chamber of generally cylindrical shape comprising an inlet arranged to introduce the glow-discharge gas into the chamber substantially tangentially.

As indicated above, it is preferred for the plasma to be ignited by a glow discharge. However, any suitable ionised fluid stream may be used to ignite the plasma. In some embodiments, it may be possible to generate that ionised gas flow by a discharge other than a glow discharge, for example by a corona discharge or an arc discharge. At least some of the features described above in relation to glow-discharge-based apparatus may also be suitable for use in a system utilising another suitable ionised gas flow.

The present invention also provides a method of forming a plasma for treating a gas, comprising generating, from a fluid different from the gas to be treated by the plasma, an ionised fluid stream for igniting the plasma, and supplying electromagnetic radiation to sustain the plasma, wherein the plasma is formed substantially at atmospheric pressure.

The method may comprise generating the ionised fluid stream in a first location and transporting the stream to a second location where it ignites the plasma. The plasma is preferably generated in a chamber that is resonant at the frequency of the electromagnetic radiation. The fluid is preferably of a different composition from the gas to be treated by the plasma. The ionised fluid stream is preferably a glow discharge.

The gas may be an effluent gas stream from a semiconductor manufacturing process tool. The effluent fluid stream may comprise a perfluorinated or hydrofluorocarbon compound, for example, one of CF₄, C₂F₆, CHF₃, C₃F₈, C₄F₈, NF₃ and SF₆.

An illustrative embodiment of the invention will now be described in detail by way of example only with reference to the accompanying drawings, in which:
Fig. 1 is a flow diagram of an abatement system incorporating a microwave plasma reactor according to the invention;
Fig. 2 is a vertical section through the reactor of Fig. 1;
Fig. 3 is a vertical section through an glow-discharge ignition electrode assembly that is incorporated into the reactor of Fig. 2; and
Fig. 4 is a circuit diagram for a circuit to be used with an ignition electrode of the reactor of Fig. 2.

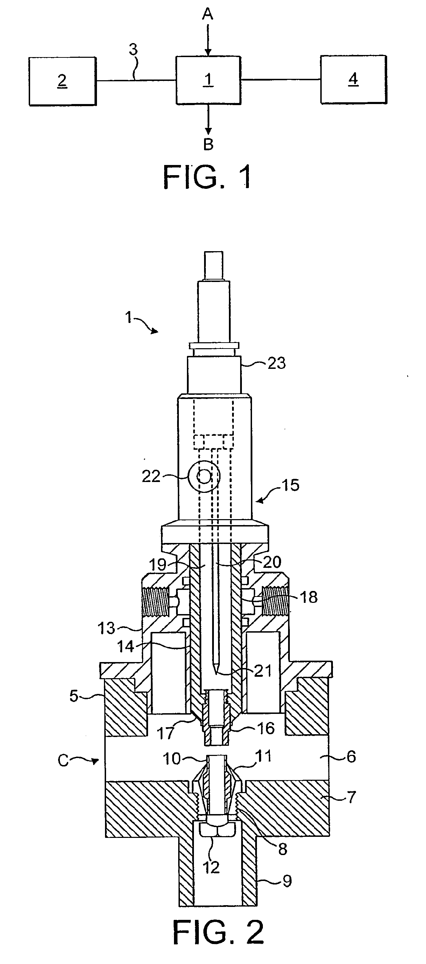

With reference to Fig. 1, an abatement system includes a microwave plasma reactor 1 to which is connected a microwave supply 2, via waveguide 3, and a power supply 4. Gas to be treated, comprising exhaust gas containing perfluorocarbons and optionally an added inert gas, is fed to the reactor 1 as shown by arrow A. Treated gas, including decomposition products, leaves the reactor 1 as shown by arrow B and is subsequently subjected to treatment by, for example, scrubbing.

With reference to Fig. 2, the reactor 1 has a conductive housing 5 inside which is located a cylindrical wall (not shown in the drawing) of a material that is transparent to microwaves defining a chamber 6. The conductive housing 5 is connected to waveguide 3 (not shown in Fig. 2) and has a bottom wall 7 in which there is an aperture 8 which communicates with an outlet tube 9 for the treated gas. Received in the aperture 8 is a first plasma-localising electrode 10 which consists of a tubular member having at its upper end a conducting flange 11 which locates the electrode 10 within a recess in the bottom wall 7. The electrode 10 is secured in position by a nut 12, which is screw-threadedly engageable upon the lower end of the electrode 10.

The upper part of housing 5 is closed by closure means 13 which defines a central bore 14 in which a cylindrical housing 18 is received. Second plasma-localising electrode 16 is received in an end 17 of the housing 18 and is arranged coaxially with electrode 16. Electrode assembly 16 is a hollow cylinder, which is arranged to be opposed to electrode 10, the electrodes 10 and 16 constituting a pair of plasma-localising electrodes.

Flange 24 of glow-discharge electrode assembly 15 mates with housing 18, such that glow-discharge electrode assembly 15 sits on housing 18. Assembly 15, housing 18 and electrode 16 define a second chamber 19 which communicates with chamber 6 through electrode 16. Concentrically arranged within housing 18 is a plasma-ignition, glow-discharge electrode 20, which is in the form of a high voltage electrode having a pointed end 21 pointing towards, but spaced from, electrodes 16 and 10. The ignition electrode forms an ionised fluid stream, which in this embodiment is in the form of a glow-discharge. In an upper region of the chamber 19 is an inlet 22 for a flow of glow-discharge gas. The inlet 22 is arranged tangentially with respect to the chamber 19 to promote formation of a helical flow path around electrode 20 generally downwardly towards electrode 16. Electrode assembly 15 is connected to a power supply via connector 23.

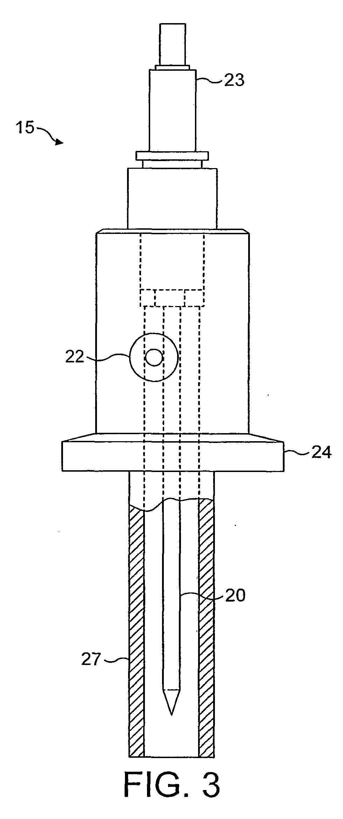

Assembly 15 is shown in more detail in Fig. 3, in which it includes a housing 27. Housing 27 is a cylindrical wall having an aperture at its lower end. In the arrangement of Fig. 2, housing 27 is replaced by housing 18, which forms part of the plasma reactor and includes reactor electrode 16, to which electrode 20 discharges. In other embodiments of the invention, assembly 15 is inserted into a prior-art reactor or other plasma-sustaining structure. In such cases, housing 27 may be required to channel the flow of discharge gas or to provide a surface to which electrode 20 may discharge.

During normal use of the reactor of Fig. 2, gas to be treated is pumped into chamber 6 via an inlet (not shown), passes between electrodes 10 and 16 and leaves chamber 6 through outlet tube 9.

Electromagnetic radiation of microwave frequency is input into chamber 6 from a magnetron via a waveguide, which abuts chamber 6 on a first side. On the opposite side of chamber 6, a continuation of the waveguide includes a movable end plate that is adjusted to cause the incident microwaves to form a standing wave. The plate is adjusted so that the standing wave forms with an antinode at electrodes 10 and 16. Such a method of delivering microwaves to a chamber is well known in the art.

Electrodes 10, 16 are at electrical ground. They are spaced apart by 5 mm. In normal use, electrodes 10, 16 serve to localise or confine a plasma formed from the gas to be treated. As the plasma is localised at the antinode of the microwave standing wave, power is efficiently coupled from the microwave field into the plasma.

Formation of a stable plasma in nitrogen (containing carbon tetrafluoride for processing) flowing at 20 litres per minute requires 1 kW to 2kW of microwave power. However, the spacing of electrodes 10, 16 is too great for the gas to be ignited into a plasma by incident microwave power alone. Glow-discharge source 15 serves as a plasma torch, providing a glow discharge to ignite the plasma, as described below. Once ignited, the plasma is sustained by the electromagnetic conditions in housing 5 and particularly in the vicinity of electrodes 10, 16.

An inert, ionisable gas (in this example, nitrogen) flows through inlet 22 of assembly 15 into chamber 19. A glow-discharge is formed in this gas as follows.

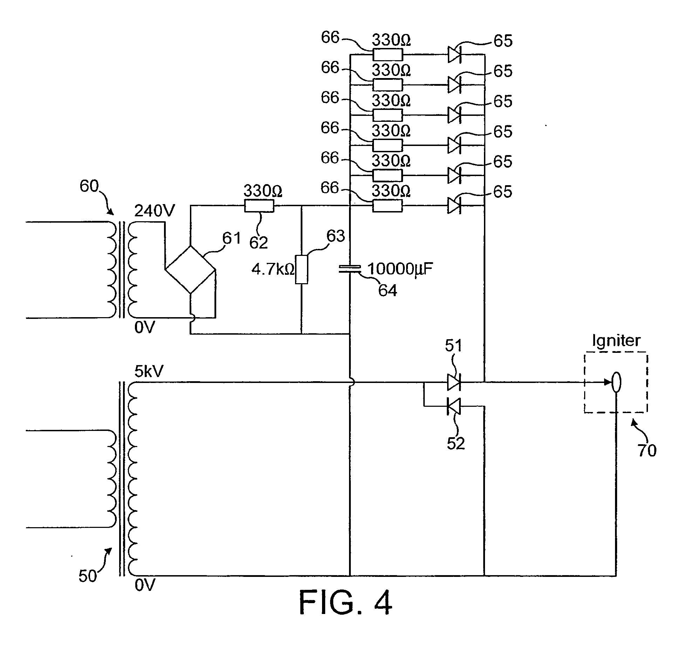

A low-voltage, high-current source (in this example, capacitor 64 shown in Fig. 4) is permanently connected to electrode 20. However, when no conductive path to ground exists, no significant current can flow from this source. During ignition of the plasma, a high voltage is applied to the electrode 20 temporarily. The high voltage results in a corona discharge through the nitrogen gas from the end 21 of electrode 20 towards a proximal portion electrode 16. That corona discharge provides a path through which a large current from the low voltage source can flow to ground. Flow of the large current causes formation of a glow discharge in the nitrogen.

The glow discharge thus formed is caused by the gas flow to move from chamber 19 through electrode 16 into chamber 6. Microwaves (indicated by arrow C) received from source 2 are able to couple efficiently to the glow discharge and, in typically less than one second, the plasma ignites, leading to a stable microwave plasma which can be maintained by means of the microwave source and electrodes 10 and 16 after the power supply to electrode 20 is switched off (typically after about three seconds).

We have found that in order for the plasma to ignite, the instantaneous power of the glow discharge should be similar to the power required to sustain the plasma, i.e. in the range 1 kW to 2KW for a flow rate of 20 litres per minute of nitrogen in chamber 6.

Thus the microwave plasma results from a gas discharge sustained by an electromagnetic field; the conditions for its maintenance are determined by the charged particle properties and energy loss mechanisms.

A suitable capacitor discharge circuit for supplying a high voltage and a low-voltage DC current to electrode 20 is shown in Fig. 4.

High-voltage (5 kV) transformer 50 is connected to igniter 70 comprising electrode 20 and electrode 16. The connection to electrode 20 is via half-wave rectifier diode 51. Diode 52 provides a route for current to discharge during the part of the AC cycle of transformer 50 when the current is in the wrong direction for discharge through electrode 20.

Low-voltage (240 V) transformer 60 is also connected to igniter 70. The transformer 60 is connected to full-wave rectifier bridge 61 and to a 330 Ω resistor 62 and a 4.7 kΩ resistor 63. Resistor 63 is connected in parallel with 10000 µF capacitor 64 and connected to electrode 20 via a bank of diodes 65, each associated with a protective 330 Ω resistors 66. The 330 Ω resistor 62 limits current draw from transformer 60 and bridge rectifier 61 during charging of capacitor 64. The 4.7 kΩ resistor 63 is a trickle discharge for capacitor 64. Resistor 63, capacitor 64 and diode 52 are each connected to the 0V terminal of transformer 50 and to electrode 16 of the igniter 70, all of which are at earth.

Prior to ignition, a large charge is built up on capacitor 64 as it is unable to discharge through igniter 70 as electrodes 20 and 16 are not connected. During ignition, high-voltage transformer 50 provides a 5kV half-wave rectified AC voltage to electrode 20. The 5 kV voltage causes a low-current, corona discharge from electrode 20 to electrode 16, as discussed above. The corona discharge provides a conductive path between electrode 20 and electrode 16. Once that path is established by the high-voltage discharge, the low-voltage capacitor 64 is able to discharge to ground using the same path. A large current then flows from capacitor 64 and a glow discharge is formed in the gas to be treated.

In this example, plasma is present approximately 90% of the time, with ignition occurring every few days. However, provision of a reliable starting mechanism makes possible arrangements in which the plasma is ignited much more frequently, for example hourly.

In summary, apparatus is described for treating an effluent gas stream from a semiconductor manufacturing process tool. The apparatus comprises a plasma torch for generating a glow discharge from an inert, ionisable gas. The gas stream is conveyed to the glow discharge to ignite a plasma. A source of electromagnetic radiation applies electromagnetic radiation to the effluent gas stream to sustain the plasma. The apparatus is particularly suitable for treating perfluorinated and hydroflurocarbon compounds in the effluent gas stream.

Whilst the example embodiment described here relates to a plasma abatement reactor 1, it is envisaged that an element such as glow-discharge electrode assembly 15 (Fig. 3) could be used to provide a glow discharge to ignite a plasma in other systems having a plasma-sustaining structure, such as that defining chamber 6, in which it can be inserted and discharge. Alternatively, an auxiliary-plasma source may be integrated more closely within a structure arranged to sustain the primary plasma, rather than being a separate, insertable unit.

As indicated above, it is preferred for the plasma to be ignited by a glow discharge. However, any suitable ionised fluid stream may be used to ignite the plasma. For example, it may be possible to generate that ionised gas flow by a discharge other than a glow discharge, for example by a corona discharge or an arc discharge. At least some of the features described above in relation to glow-discharge-based apparatus may also be suitable for use in a system utilising another suitable ionised gas flow.

## Claims

1. Apparatus for forming a plasma for treating a gas, comprising a structure (6, 10, 16) arranged to sustain the plasma and to be substantially at atmospheric pressure during plasma formation, **characterised in that** it comprises means (15) for generating, from a fluid different from the gas to be treated by the plasma, an ionised fluid stream for igniting the plasma.

2. Apparatus according to Claim 1, wherein the plasma-sustaining structure is arranged to utilise electromagnetic radiation in sustaining the plasma.

3. Apparatus according to Claim 2, wherein the plasma-sustaining structure comprises a source (2) of the electromagnetic radiation.

4. Apparatus according to Claim 2, wherein the plasma-sustaining structure is suitable for connection to a source (2) of the electromagnetic radiation.

5. Apparatus according to any of Claims 2 to 4, wherein the electromagnetic radiation is microwave or radio-frequency radiation.

6. Apparatus according to any of Claims 2 to 5, wherein the plasma-sustaining structure comprises a chamber (6) that is resonant at the frequency of the electromagnetic radiation.

7. Apparatus according to any preceding claim, wherein the plasma-sustaining structure comprises a chamber (6) that is connectable to a flow of the gas to be treated by the plasma.

8. Apparatus according to any preceding claim, wherein the plasma-sustaining structure comprises at least one plasma-localising electrode (10, 16).

9. Apparatus according to Claim 8, wherein the plasma-localising electrode (10, 16) is arranged at or near an antinode of an electromagnetic standing wave.

10. Apparatus according to Claim 8 or Claim 9, wherein the plasma-sustaining structure comprises two plasma-localising electrodes (10, 16).

11. Apparatus according to Claim 10, wherein the plasma-localising electrodes comprise first and second electrodes opposed (10, 16) to one another and spaced from one another by a spacing of at least 1mm.

12. Apparatus according to Claim 11, wherein the spacing is between 2 and 8mm.

13. Apparatus according to any of Claims 8 to 12, wherein said at least one plasma-localising electrode is at electrical ground.

14. Apparatus according to any preceding claim, wherein the fluid is of a different composition from the gas to be treated by the plasma.

15. Apparatus according to any preceding claim, wherein the means for generating the ionised fluid stream comprises means (15) for generating a glow discharge.

16. Apparatus according to Claim 15, wherein the means for generating the glow discharge comprises a glow-discharge electrode (20) for forming the glow discharge and comprises, or is suitable for connection to, a source of said glow-discharge gas.

17. Apparatus according to Claim 16, wherein the glow-discharge electrode (20) is elongate.

18. Apparatus according to Claim 16 or Claim 17, wherein the glow-discharge electrode (20) is arranged to discharge to the plasma-sustaining structure.

19. Apparatus according to any of Claims 16 to 18, wherein the glow-discharge electrode is so arranged that in use it is in the glow-discharge gas flow upstream of the plasma-sustaining structure, such that the glow discharge is transported into the plasma-sustaining structure by the glow-discharge gas.

20. Apparatus according to any of Claims 15 to 19, wherein the means for generating the glow discharge comprises circuitry for providing a voltage sufficiently high to initiate the glow discharge and circuitry for providing sufficient current to sustain the glow discharge for at least 0.1 seconds.

21. Apparatus according to Claim 20, wherein the means for generating the glow discharge is arranged to cease generation of the glow discharge after the plasma is ignited.

22. Apparatus according to Claim 20 or Claim 21, wherein the means for generating the glow discharge is arranged to generate a glow discharge for up to 10 seconds.

23. Apparatus according to Claim 22, wherein the means for generating the glow discharge is arranged to generate a glow discharge for up to 5 seconds.

24. Apparatus according to Claim 23, wherein the means for generating the glow discharge is arranged to generate a glow discharge from 1 to 5 seconds.

25. Apparatus according to any preceding claim, wherein the means for generating the ionised fluid stream comprises a chamber (19) of generally cylindrical shape comprising an inlet (22) arranged to introduce the ionised fluid stream into the chamber substantially tangentially.

26. A method for forming a plasma substantially at atmospheric pressure for treating a gas, comprising the step of supplying electromagnetic radiation to sustain the plasma, **characterised in that** it comprises the step of generating, from a fluid different from the gas to be treated by the plasma, an ionised fluid stream for igniting the plasma.

27. A method according to Claim 26, comprising generating the ionised fluid stream in a first location and transporting the ionised fluid stream to a second location where it ignites the plasma.

28. A method according to Claim 26 or Claim 27, wherein the electromagnetic radiation is microwave or radio-frequency radiation.

29. A method according to any of Claims 26 to 28, wherein the plasma is generated in a chamber (6) that is resonant at the frequency of the electromagnetic radiation.

30. A method according to any of Claims 26 to 29, wherein the fluid is of a different composition from the gas to be treated by the plasma.

31. A method according to any of Claims 26 to 30, wherein the ionised fluid stream is a glow discharge.

32. A method according to any of Claims 26 to 31, wherein the gas is an effluent gas stream from a semiconductor manufacturing process tool.

33. A method according to Claim 32, wherein the effluent fluid stream comprises a perfluorinated or hydrofluorocarbon compound.

34. A method according to Claim 33, wherein the compound comprises one of CF₄, C₂F₆, CHF₃, C₃F₈, C₄F₈, NF₃ and SF₆.

## Patentansprüche

1. Einrichtung zum Bilden eines Plasmas zur Behandlung eines Gases, mit einer Struktur (6, 10, 16), die zur Aufrechterhaltung des Plasmas angeordnet ist und während der Bildung des Plasmas im wesentlichen unter atmosphärischem Druck steht, **dadurch gekennzeichnet, dass** sie Mittel (15) zum Erzeugen eines ionisierten Fluidstroms aus einem von dem durch das Plasma zu behandelnden Gas verschiedenen Fluid zum Zünden des Plasmas aufweist.

2. Einrichtung nach Anspruch 1, wobei die Plasma-aufrechterhaltende Struktur zur Verwendung elektromagnetischer Strahlung zur Unterhaltung des Plasmas ausgelegt ist.

3. Einrichtung nach Anspruch 2, wobei die Plasma-aufrechterhaltende Struktur eine Quelle (2) der elektromagnetischen Strahlung aufweist.

4. Einrichtung nach Anspruch 2, wobei die Plasma-aufrechterhaltende Struktur zur Verbindung einer Quelle (2) der elektromagnetischen Strahlung geeignet ist.

5. Einrichtung nach einem der Ansprüche 2 bis 4, wobei die elektromagnetische Strahlung Mikrowellen- oder Radiofrequenzstrahlung ist.

6. Einrichtung nach einem der Ansprüche 2 bis 5, wobei die Plasma-aufrechterhaltende Struktur eine Kammer (6) aufweist, die bei der Frequenz der elektromagnetischen Strahlung resonant ist.

7. Einrichtung nach einem der vorhergehenden Ansprüche, wobei die Plasma-aufrechterhaltende Struktur eine Kammer (6) aufweist, die mit einer Strömung des durch das Plasma zu behandelnden Gases verbindbar ist.

8. Einrichtung nach einem der vorhergehenden Ansprüche, wobei die Plasma-aufrechterhaltende Struktur mindestens eine Plasma-lokalisierende Elektrode (10, 16) aufweist.

9. Einrichtung nach Anspruch 8, wobei die Plasma-lokalisierende Elektrode (10, 16) an oder nahe einer Antinode einer elektromagnetischen stehenden Welle angeordnet ist.

10. Einrichtung nach Anspruch 8 oder Anspruch 9, wobei die Plasma-aufrechterhaltende Struktur zwei Plasma-lokalisierende Elektroden (10, 16) aufweist.

11. Einrichtung nach Anspruch 10, wobei die Plasma-lokalisierenden Elektroden erste und zweite Elektroden umfassen, die einander gegenüber liegen (10, 16) und voneinander durch einen Abstand von mindestens 1 mm beabstandet sind.

12. Einrichtung nach Anspruch 11, wobei der Abstand zwischen 2 und 8 mm liegt.

13. Einrichtung nach einem der Ansprüche 8 bis 12, wobei die mindestens eine Plasma-lokalisierende Elektrode auf elektrischem Massepotential liegt.

14. Einrichtung nach einem der vorhergehenden Ansprüche, wobei das Fluid von einer anderen Zusammensetzung als das durch das Plasma zu behandelnde Gas ist.

15. Einrichtung nach einem der vorhergehenden Ansprüche, wobei die Mittel zum Erzeugen des ionisierten Fluidstroms Mittel (15) zum Erzeugen einer Glimmentladung aufweisen.

16. Einrichtung nach Anspruch 15, wobei die Mittel zum Erzeugen der Glimmentladung eine Glimmentladungselektrode (20) zum Bilden der Glimmentladung aufweist und eine Quelle des Glimmentladungsgases aufweist oder für die Verbindung damit geeignet ist.

17. Einrichtung nach Anspruch 16, wobei die Glimmentladungselektrode (20) länglich ist.

18. Einrichtung nach Anspruch 16 oder Anspruch 17, wobei die Glimmentladungselektrode (20) zum Entladen in die Plasma-aufrechterhaltende Struktur ausgelegt ist.

19. Einrichtung nach einem der Ansprüche 16 bis 18, wobei die Glimmentladungselektrode so angeordnet ist, dass sie im Gebrauch in dem Glimmentladungsgasstrom stromauf der Plasma-aufrechterhaltenden Struktur liegt, derart, dass die Glimmentladung durch das Glimmentladungsgas in die Plasma-aufrechterhaltende Struktur transportiert wird.

20. Einrichtung nach einen der Ansprüche 15 bis 19, wobei die Mittel zum Erzeugen der Glimmentladung eine Schaltung zur Erzeugung einer ausreichend hohen Spannung aufweisen, um die Glimmentladung zu initiieren, und eine Schaltung zum Erzeugen von ausreichend Strom zum Aufrechterhalten der Glimmentladung während mindestens 0,1 Sekunden aufweisen.

21. Einrichtung nach Anspruch 20, wobei die Mittel zum Erzeugen der Glimmentladung zum Beendigen der Erzeugung der Glimmentladung nach dem Zünden des Plasmas ausgelegt sind.

22. Einrichtung nach Anspruch 20 oder Anspruch 21, wobei die Mittel zum Erzeugen der Glimmentladung zum Erzeugen einer Glimmentladung für bis zu 10 Sekunden ausgelegt sind.

23. Einrichtung nach Anspruch 22, wobei die Mittel zum Erzeugen der Glimmentladung zum Erzeugen einer Glimmentladung für bis zu 5 Sekunden ausgelegt sind.

24. Einrichtung nach Anspruch 23, wobei die Mittel zum Erzeugen der Glimmentladung zum Erzeugen einer Glimmentladung von 1 bis 5 Sekunden ausgelegt sind.

25. Einrichtung nach einem der vorhergehenden Ansprüche, wobei die Mittel zum Erzeugen des ionisierten Fluidstroms eine Kammer (19) von etwa zylindrischer Form mit einem Einlass (22) aufweisen, die zum Einleiten des ionisierten Fluidstroms im wesentlichen tangential in die Kammer angeordnet ist.

26. Verfahren zum Bilden eines Plasmas unter im wesentlichen atmosphärischem Druck zum Behandeln eines Gases, mit dem Schritt des Zuführens elektromagnetischer Strahlung zur Aufrechterhaltung des Plasmas, **dadurch gekennzeichnet, dass** es den Schritt des Erzeugens eines ionisierten Fluidstroms aus einem anderen Fluid als dem durch das Plasma zu behandelnden Gas zum Zünden des Plasmas aufweist.

27. Verfahren nach Anspruch 26, welches das Erzeugen des ionisierten Fluidstroms an einer ersten Stelle und Transportieren des ionisierten Fluidstroms an eine zweite Stelle umfasst, wo es das Plasma zündet.

28. Verfahren nach Anspruch 26 oder Anspruch 27, wobei die elektromagnetische Strahlung Mikrowellen- oder Radiofrequenzstrahlung ist.

29. Verfahren nach einem der Ansprüche 26 bis 28, wobei das Plasma in einer Kammer (6) erzeugt wird, die bei der Frequenz der elektromagnetischen Strahlung resonant ist.

30. Verfahren nach einem der Ansprüche 26 bis 29, wobei das Fluid eine andere Zusammensetzung hat als das durch das Plasma zu behandelnde Gas.

31. Verfahren nach einem der Ansprüche 26 bis 30, wobei der ionisierte Fluidstrom eine Glimmentladung ist.

32. Verfahren nach einem der Ansprüche 26 bis 31, wobei das Gas ein aus einem Halbleiterfertigungsprozesswerkzeug ausströmender Gasstrom ist.

33. Verfahren nach Anspruch 32, wobei der Austrittsfluidstrom eine perfluorinierte oder Hydrofluorkarbon-Verbindung ist.

34. Verfahren nach Anspruch 33, wobei die Verbindung einen der Stoffe CF₄, C₂F₆, CHF₃, C₃F₈, C₄F₈, NF₃ und SF₆ ist.

## Revendications

1. Dispositif pour former un plasma pour traiter un gaz, comprenant une structure (6, 10, 16) agencée pour entretenir le plasma et pour être sensiblement à température atmosphérique pendant la formation du plasma, ***caractérisé en ce qu'**il* comprend des moyens (15) pour engendrer, à partir d'un fluide différent du gaz à traiter par le plasma, un courant de fluide ionisé pour allumer le plasma.

2. Dispositif selon la revendication 1, dans lequel la structure entretenant le plasma est agencée pour utiliser un rayonnement électromagnétique pour entretenir le plasma.

3. Dispositif selon la revendication 2, dans lequel la structure pour entretenir le plasma comprend une source (2) du rayonnement électromagnétique.

4. Dispositif selon la revendication 2, dans lequel la structure pour entretenir le plasma est adaptée à une connexion avec une source (2) du rayonnement électromagnétique.

5. Dispositif selon l'une quelconque des revendications 2 à 4, dans lequel le rayonnement électromagnétique est un rayonnement micro-ondes ou à fréquence radio-électrique.

6. Dispositif selon l'une quelconque des revendications 2 à 5, dans lequel la structure pour entretenir le plasma comprend une chambre (6) qui est résonnante à la fréquence du rayonnement électromagnétique.

7. Dispositif selon l'une quelconque des revendications précédentes, dans lequel la structure pour entretenir le plasma comprend une chambre (6) qui est raccordable à un flux du gaz à traiter par le plasma.

8. Dispositif selon l'une quelconque des revendications précédentes, dans lequel la structure pour entretenir le plasma comprend au moins une électrode (10, 16) localisatrice du plasma.

9. Dispositif selon la revendication 8, dans lequel l'électrode (10, 16) localisatrice du plasma est agencée sur ou à proximité d'un ventre d'une onde électromagnétique stationnaire.

10. Dispositif selon la revendication 8 ou la revendication 9, dans lequel la structure pour entretenir le plasma comprend deux électrodes (10, 16) localisatrices du plasma.

11. Dispositif selon la revendication 10, dans lequel les électrodes localisatrices du plasma comprennent une première et une deuxième électrodes (10, 16) opposées l'une à l'autre et espacées l'une de l'autre avec un écartement d'au moins 1 mm.

12. Dispositif selon la revendication 11, dans lequel l'écartement est compris entre 2 et 8 mm.

13. Dispositif selon l'une quelconque des revendications 8 à 12, dans lequel ladite au moins une électrode localisatrice du plasma est sur la mise à la terre électrique.

14. Dispositif selon l'une quelconque des revendications précédentes, dans lequel le fluide est d'une composition différente du gaz à traiter par le plasma.

15. Dispositif selon l'une quelconque des revendications précédentes, dans lequel les moyens pour engendrer le courant de fluide ionisé comprennent des moyens (15) pour engendrer une décharge luminescente.

16. Dispositif selon la revendication 15, dans lequel les moyens pour engendrer la décharge luminescente comprennent une électrode (20) de décharge luminescente pour engendrer la décharge luminescente et comprennent, ou sont aptes à une connexion avec, une source dudit gaz de décharge luminescente.

17. Dispositif selon la revendication 16, dans lequel l'électrode (20) de décharge luminescente est allongée.

18. Dispositif selon la revendication 16 ou la revendication 17, dans lequel l'électrode (20) de décharge luminescente est agencée pour décharger sur la structure pour entretenir le plasma.

19. Dispositif selon l'une quelconque des revendications 16 à 18, dans lequel l'électrode de décharge luminescente est agencée de façon à ce que, à l'utilisation, elle se trouve dans le flux de gaz de décharge luminescente en amont de la structure pour entretenir le plasma, de telle sorte que la décharge luminescente soit transportée dans la structure pour entretenir le plasma par le gaz de décharge luminescente.

20. Dispositif selon l'une quelconque des revendications 15 à 19, dans lequel les moyens pour engendrer la décharge luminescente comprennent un circuit destiné à fournir une tension suffisamment élevée pour déclencher la décharge luminescente et un circuit destiné à fournir suffisamment de courant pour soutenir la décharge luminescente pendant au moins 0,1 seconde.

21. Dispositif selon la revendication 20, dans lequel les moyens pour engendrer la décharge luminescente sont agencés pour faire cesser la production de la décharge luminescente une fois que le plasma a été allumé.

22. Dispositif selon la revendication 20 ou la revendication 21, dans lequel les moyens pour engendrer la décharge luminescente sont agencés pour engendrer une décharge luminescente pendant une durée allant jusqu'à 10 secondes.

23. Dispositif selon la revendication 22, dans lequel les moyens pour engendrer la décharge luminescente sont agencés pour engendrer une décharge luminescente pendant une durée allant jusqu'à 5 secondes.

24. Dispositif selon la revendication 23, dans lequel les moyens pour engendrer la décharge luminescente sont agencés pour engendrer une décharge luminescente pendant une durée de 1 à 5 secondes.

25. Dispositif selon l'une quelconque des revendications précédentes, dans lequel les moyens pour engendrer le courant de fluide ionisé comprennent une chambre (19) de forme générale cylindrique, comprenant une entrée (22) agencée de manière à introduire le courant de fluide ionisé dans la chambre de manière sensiblement tangentielle.

26. Procédé de formation d'un plasma sensiblement à pression atmosphérique afin de traiter un gaz, comprenant l'étape de fourniture d'un rayonnement électromagnétique pour entretenir le plasma, ***caractérisé en ce qu'**il* comprend l'étape consistant à engendrer, à partir d'un fluide différent du gaz à traiter par le plasma, un courant de fluide ionisé pour allumer le plasma.

27. Procédé selon la revendication 26, comprenant la formation du courant de fluide ionisé en un premier emplacement et le transport du courant de fluide ionisé jusqu'à un deuxième emplacement où il allume le plasma.

28. Procédé selon la revendication 26 ou la revendication 27, dans lequel le rayonnement électromagnétique est un rayonnement micro-ondes ou à fréquence radio-électrique.

29. Procédé selon l'une quelconque des revendications 26 à 28, dans lequel le plasma est engendré dans une chambre (6) qui est résonnante à la fréquence du rayonnement électromagnétique.

30. Procédé selon l'une quelconque des revendications 26 à 29, dans lequel le fluide est d'une composition différente du gaz à traiter par le plasma.

31. Procédé selon l'une quelconque des revendications 26 à 30, dans lequel le courant de fluide ionisé est une décharge luminescente.

32. Procédé selon l'une quelconque des revendications 26 à 31, dans lequel le gaz est un courant d'effluents gazeux provenant d'un outil d'un procédé de fabrication de semiconducteurs.

33. Procédé selon la revendication 32, dans lequel le courant d'effluents gazeux comprend un composé perfluoré ou hydrofluorocarbure.

34. Procédé selon la revendication 33, dans lequel le composé comprend l'un parmi CF₄, C₂F₆, CHF₃, C₃F₈, C₄F₈, NF₃ et SF₆.
